# EUROPEAN PATENT APPLICATION

(11) **EP 1 129 925 A1**
(43) Date of publication of application: **05.09.2001**
(21) Application number: 00104160.7
(22) Date of filing: 29.02.2000
(51) Int. Cl.: B62D 3/12, B62D 5/22

(54) **Improvements in steering mechanisms for automotive vehicles**

(71) Applicant: Visteon Automotive Systems Inc., Dearborn, MI 48126 (US)
(72) Inventor: Ballester, Adrian, Provincia de Buenos Aires (AR)
(74) Representative: Kador & Partner

(57) **Abstract**

Improvements in steering mechanisms for automotive vehicles particularly of the pinion-rack bar type, comprising a carcass (1) for lodging a rack bar slidable mounted on a guiding bushing at the end of said carcass; being said rack bar in an assembly relationship with a pinion mounted on bushings fixed to an inner housing positioned at a predetermined angular position inside said housing and forming integral part thereof; being said pinion axis related to valve means of a hydraulic-power system of steering mechanism, wherein carcass rack bar pinion housing (2) and valve carcass (3) comprise respective tubes (2,3) positioned at predetermined angular position between each other, having one of said tubes a length for delimiting a sole pinion and valve means housing, being said tubes provided with traverse grooves defining semi circular slots (10,12) delimiting openings and communicating said tubes in said predetermined angular position for connecting said rack bar and pinion in an assembly relationship, having the rack bar housing tube opening a greater cross section for supporting its own edge on the tube wall for lodging pinion and rack bar, being both tubes welded at a predetermined angular position, being provided said rack bar tube with inner end seats located at opposite sides of pinion tube and valve means, for mounting respective guiding bushings of said rack bar and for absorbing loads transmitted to the rack bar.

## Description

### Field of the invention:

The present invention is related to improvements in powered or manual pinion-rack bar steering mechanisms for automotive vehicles, particularly to improvements in the cited mechanisms addressed to incorporate a novel mechanical structure which simplifies alignment and mechanization operations on rack bar, pinion and valve casings during manufacture so as to achieve an optimal operation of said steering mechanism.

Even more specifically the present invention is related to improve the mechanical structure of steering casings.

### Background of the invention:

Steering casings are conventionally manufactured through aluminium casting or die-cast procedures. By using these procedures an iron die-cast or casting valve casing is needed when the steering mechanisms is of the powered type. Mounting and aligning this iron valve casing with regard to the above cited aluminium rack-bar casing requires a complex and precise mechanization operation so as to achieve a proper alignment and operation of components.

Casing alignment operation during manufacture of steering mechanisms is not easy to achieve since two different mechanization operations are necessary: one addressed to the aluminium rack-bar casing and the other for casted valve casing which should be properly aligned to achieve a proper functional behaviour of different steering mechanism components.

The above cited alignment procedure between rack- bar casing and valve casing during manufacture sometimes requires positioning said casings in different angular positions depending on the vehicle and steering system to which said casings are applied. Therefore, using different kind of dies for manufacturing rack-bar casings is required allowing a proper adaptation of valve casing in its proper angular position with regard to rack bar casing.

In order to solve this problem a new improved casing with novel structural characteristics is purposed by the present invention, which brings the possibility of a proper and selective mechanical alignment of valve casing with regard to rack-bar casing.

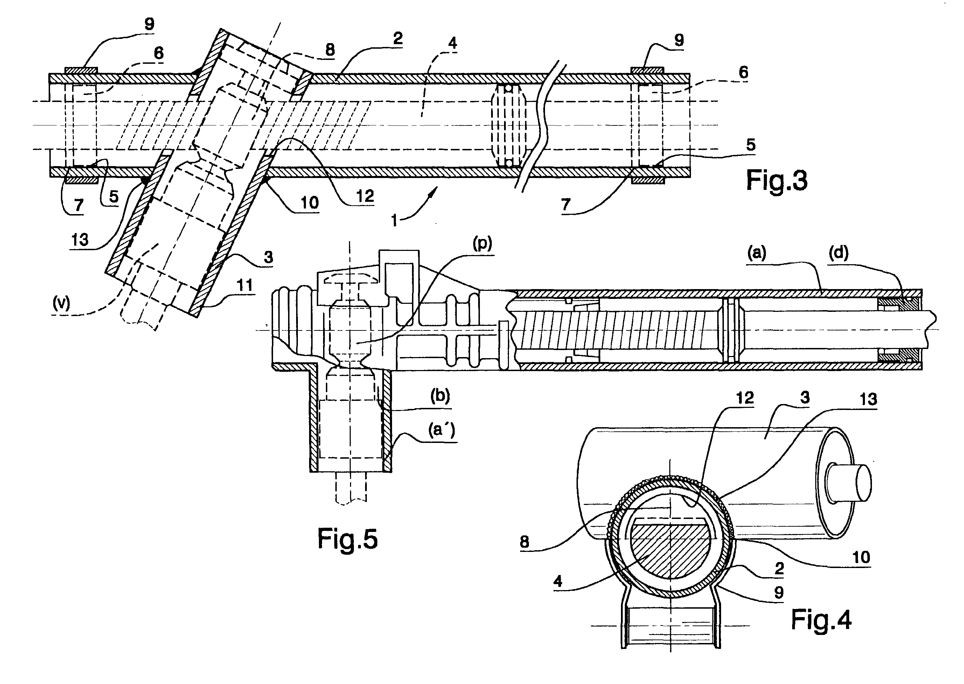

In order to achieve a best interpretation of the above cited problems usually found in prior art steering systems, as well as the way purposed by the present invention to solve them, Figure 5 attached shows a conventional powered steering mechanism comprising an aluminium-cast casing (a) including an integral cylindrical housing (b) for lodging pinion (p) crossed by rack bar (c) for a mutual assembly relationship. Said casing (a) together with said housing (b) angularly positioned with regard to the geometric axis of casing (a) is complemented with a valve casing (a') which should be aligned during mechanization process with housing (b) of pinion (p). From the above could be concluded that two different mechanization processes are necessary: one for the rack bar casing (a) and the other for valve casing (a') and pinion housing (p). Aligning and mounting these pieces usually involves serious aligning problems, which causes problems during the final assembly operation during manufacture.

Therefore, these known mechanisms comprise an aluminium-cast casing (a), a valve casing (a') fixed to a pinion housing (b) and a tube forming the hydraulic cylinder for the end rack bar (c) piston. Support of said piston on an end rack bar bushing (d) as well as on the pinion (p) lodged in a carcass cylindrical housing (b) creates noises and knocking effects as a response of loads usually transmitted to the rack bar (c) during operation.

Different angular positions between rack bar carcass and valve carcass are not allow with said conventional system and in order to solve this problem different matrixes or dies are used.

### Summary of the invention:

The present invention comprises a pair of tubular elements each defining casing housing for rack-bar and valve-pinion sets respectively. Both tubular elements comprise steel easy-mechanized tubes angularly assembled in accordance with a predetermined alignment through notched grooves of their lateral walls. Once tubes including said grooves are assembled creates a common space between them. Thus said tubes are welded by said notched grooves in the required angular position.

This particular casing structure avoids porousness problems during casting procedures, makes the mechanical alignment of tubular components easier since said tubular elements are not restricted to any particular casting form, allows an easy mechanization of seats for rack-bar bushings as well as for detents of rack-bar casing tube in points different from the conventional points offering the possibility of avoiding bothersome noises usually found in this kind of conventional steering casings.

The present invention overcomes the above-cited problems. For manufacturing the carcass two different easily workable tubular components are used. The particular novel assembly of tubes allows an easy and correct alignment between them for a proper steering "return ability". That is, pinion and rack bar ability to "return" to its proper assembled position once a load take pinion and rack bar teeth out of contact. The present invention also allows a perfect mechanization so as to achieve a proper concentric position of bushings mounted in an end of said rack bar carcass on an end of said tube spaced apart from pinion housing so that a double-guided assembly relationship between pinion and rack bar is achieved as well as a complete elimination of noises.

Assembly operation between said tubes comprises superposing respective grooves of each tube and welding the superposing edge once said tubes are arranged in the proper angular position facilitating alignment and assembly operation of steering components during manufacture.

Thus, the present invention is referred to improvements in steering mechanisms for automotive vehicles particularly of the pinion-rack bar type, comprising a carcass for lodging a rack bar slidable mounted on a guiding bushing at the end of said carcass; being said rack bar in an assembly relationship with a pinion mounted on bushings fixed to an inner housing positioned at a predetermined angular position inside said housing and forming integral part thereof; being said pinion axis related to valve means of a hydraulic-power system of steering mechanism, wherein carcass rack bar pinion housing and valve carcass comprise respective tubes positioned at predetermined angular position between each other, having one of said tubes a length for delimiting a sole pinion and valve means housing, being said tubes provided with traverse grooves defining semi circular slots delimiting openings and communicating said tubes in said predetermined angular position for connecting said rack bar and pinion in an assembly relationship, having the rack bar housing tube opening a greater cross section for supporting its own edge on the tube wall for lodging pinion and rack bar, being both tubes welded at a predetermined angular position, being provided said rack bar tube with inner end seats located at opposite sides of pinion tube and valve means, for mounting respective guiding bushings of said rack bar and for absorbing loads transmitted to the rack bar.

Anyway, the above-mentioned and other objects and goals of the present invention will be readily understood by reading the present specification and claims.

### Description of accompanying figures:

For clearly understanding the scope of the present invention as well as the way used to put it into practice it has been illustrated in the accompanying drawings, which should be interpreted as an exemplary embodiment of the invention and not as a limitation thereof.

Figure 1 is a perspective view of a steering mechanism casing in accordance with the present invention.

Figure 2 is another perspective view showing carcass components allowing a correct alignment by way of welding assembly.

Figure 3 is a longitudinal cross section of casing in accordance with the present invention showing the particular rack bar position.

Figure 4 is a cross sectional view through 1-1 line of Figure 3, showing the welding line through which tubular elements forming rack bar carcass and valve carcass are fixed.

Finally, figure 5 schematically shows a longitudinal cross section of a prior art steering mechanism.

### Detailed description of the invention:

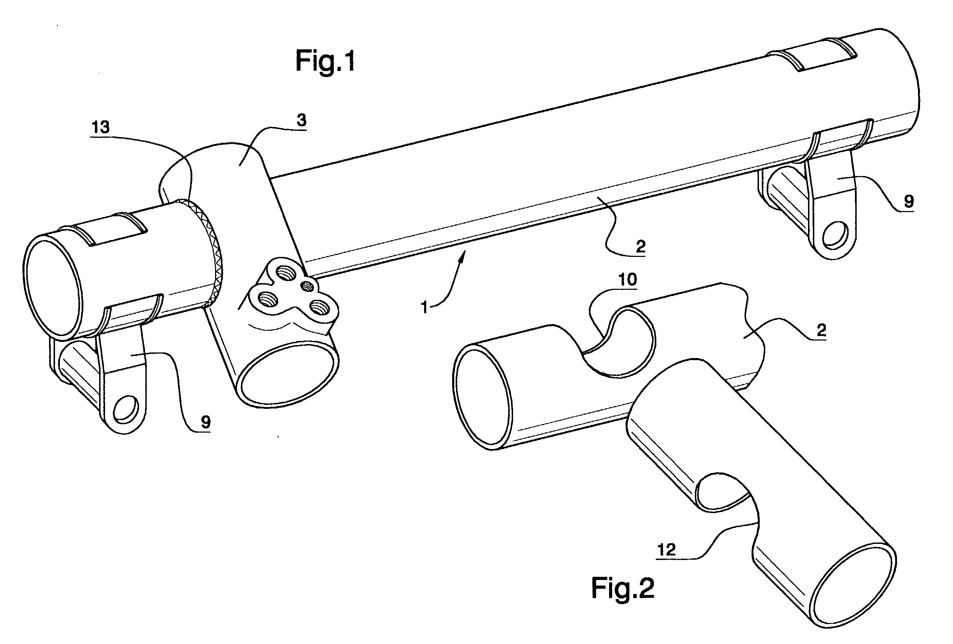

In order to achieve the above cited goals, that is a proper alignment of steering mechanism components, eliminate bothersome noises and an easy mechanization of steering casing, the improvements illustrated in figures 1-4 are purposed, where a new improved casing comprises two tubular elements 2-3. Said tubes may be manufactured using steel or any other appropriate metallic material, as well as any proper combination such as steel for tube 2 and cast iron for tube 3 corresponding to valve casing (b).

Both tubular elements 2-3 may be easily mechanized in its whole length defining a rack bar housing inside tube 2 as well as seats 5 for a pair of bushings 6 respectively arranged at the end of said tube 1, as well as seats 7 for detent means. Said seats 5-7 may be concentrically manufactured so its ends may guide the rack bar 4 and loads may be absorbed.

This is an important difference from prior art casings because they usually have only one bushing and bothersome noises are created when assembly relationship is created between teeth of rack bar 4 and pinion 8 due to said bushing location.

Tube 1 provides end clamps 9 for fixing it to the vehicle's chassis and a groove 10 at the middle part thereof. Tube 2 defining the valve casing (v) and a pinion 8 casing includes a lesser length than tube 1, anyway it may be easily mechanized for forming seats 11 for supporting pinion axis. This tube 2 includes a semi circular groove 12 of a lesser diameter than diameter of groove 10. Once tubes 1-2 are assembled and grooves 10-12 are overlaid groove 10 edge rest on groove 12 edge which is allowed by said diameter difference between grooves 10-12.

During manufacturing process tube 2 should be arranged in a proper angular position therefore its geometrical axis is arranged in accordance with the steering angular position with regard to the geometrical axis of tube 1.

Once said tubes 1-2 are positioned they are welded to form an integral piece.

This assembly operation with a selective position of components avoids alignment problems that finally affects final assembly operation of the steering mechanism during manufacture.

Considering the assembly characteristics between tubes 1-2 it is possible to vary their angular position taking into account vehicles requirements in which said tubes of steering is mounted. In the prior art steering mechanisms this is not possible and different dies or matrixes are necessary for adapting it to the different vehicle's requirements.

While certain representative embodiments and details have been shown for the purpose of illustrating the subject invention, it will be apparent to those skilled in the art that various changes and modifications can be made therein without departing from the scope of the subject invention.

## Claims

1. Improvements in steering mechanisms for automotive vehicles particularly of the pinion-rack bar type, comprising a carcass for lodging a rack bar slidable mounted on a guiding bushing at the end of said carcass; being said rack bar in an assembly relationship with a pinion mounted on bushings fixed to an inner housing positioned at a predetermined angular position inside said housing and forming integral part thereof; being said pinion axis related to valve means of a hydraulic-power system of steering mechanism, wherein carcass rack bar pinion housing and valve carcass comprise respective tubes positioned at predetermined angular position between each other, having one of said tubes a length for delimiting a sole pinion and valve means housing, being said tubes provided with traverse grooves defining semi circular slots delimiting openings and communicating said tubes in said predetermined angular position for connecting said rack bar and pinion in an assembly relationship, having the rack bar housing tube opening a greater cross section for supporting its own edge on the tube wall for lodging pinion and rack bar, being both tubes welded at a predetermined angular position, being provided said rack bar tube with inner end seats located at opposite sides of pinion tube and valve means, for mounting respective guiding bushings of said rack bar and for absorbing loads transmitted to the rack bar.

2. Improvements in accordance with claim 1 wherein said tubes made of steel are capable of being easily mechanized along its entire length having said rack bar tube end clamps for fixing it to the vehicle.
